# EUROPÄISCHE PATENTSCHRIFT

(11) **EP 0 340 385 B1**
(45) Veröffentlichungstag und Bekanntmachung des Hinweises auf die Patenterteilung: **10.03.1993**
(21) Anmeldenummer: 89100857.5
(22) Anmeldetag: 19.01.1989
(51) Int. Cl.: F16J 15/46, F16L 17/10

(54) **Aufblasbare Dichtung**
Inflatable sealing
Garniture gonflable

(30) Priorität: 06.05.1988 DE 3815455
(43) Veröffentlichungstag der Anmeldung: 08.11.1989
(73) Patentinhaber: Firma Carl Freudenberg, 69469 Weinheim (DE)
(72) Erfinder: Kief, Rainer, D-6832 Hockenheim (DE); Schlüter, Helmut, Dr., D-6101 Reichelsheim (DE); Bitsch, Horst, D-6148 Heppenheim (DE)

(56) Entgegenhaltungen:
- EP-A- 0 091 254
- DE-A- 2 931 779
- FR-A- 1 310 018
- US-A- 3 574 360

## Beschreibung

Die Erfindung betrifft eine aufblasbare Dichtung nach dem Oberbegriff von Anspruch 1.

Eine solche Dichtung ist aus der FR-A-1 310 018 bekannt. Sie weist eine ausgeglichene Anpressung der Dichtfläche an das abzudichtende Bauteil auf. Die Gebrauchsdauer entsprechender Dichtungen ist jedoch wenig befriedigend.

Der Erfindung liegt die Aufgabe zugrunde, eine Dichtung der eingangs genannten Art derart weiter zu entwickeln, daß sich bei ausgeglichener Anpressung der Dichtfläche eine deutlich verbesserte Gebrauchsdauer ergibt.

Diese Aufgabe wird erfindungsgemäß bei einer Dichtung der eingangs genannten Art mit den kennzeichnenden Merkmalen von Anspruch 1 gelöst. Auf vorteilhafte Ausgestaltungen nehmen die Unteransprüche bezug.

Bei der erfindungsgemäßen Dichtung ist das Dichtelement mit im Bereich des Bodens der Nut angeordneten, einander zugewandten, zweiten Leisten versehen, die einen Abstand voneinander haben. Hierdurch wird eine besondere dauerhafte und ausgezeichnete Abdichtung des von dem elastischen Dichtelement und der Nut umschlossenen Hohlraums erhalten.

Das Dichtelement kann ein spiegelbildlich gestaltetes Profil aufweisen.

Die Gefahr eines Verlustes des Dichtelements bei einer Druckbeaufschlagung des Innenraumes in Fällen, in denen das abzudichtende Bauteil nicht verfügbar ist, wird dadurch reduziert. Um dennoch eine ausreichende Elastizität und Dauerhaltbarkeit zu erreichen, sollte das Dichtelement darüber hinaus im Bereich rückwärtig seiner Dichtfläche an der dünnsten Stelle eine Wandstärke haben, die etwa 3 - 5 mal so groß ist wie der gegenseitige Abstand der ersten Leisten. Desweiteren können im Bereich der Dichtfläche mehrere, sich parallel zu dem Dichtelement erstreckende Dichtlippen vorgesehen sein, was die Abdichtwirkung erhöht. Zwei dieser Dichtlippen sollten dabei den beiderseits benachbarten ersten Leisten möglichst dicht benachbart sein um das Auftreten eines Kippmoments in dem Dichtelement während seiner Druckbeaufschlagung zu verhindern.

Nach einer anderen Ausgestaltung ist es vorgesehen, daß das Dichtelement wenigstens im Bereich des Bodens und im Bereich der Seitenflächen der Nut mit jeweils zwei sich parallel zu seiner Längsrichtung erstreckenden Dichtlippen versehen ist. Herstellungsbedingte Oberflächenunebenheiten des Dichtelementes und/oder der Nut lassen sich hierdurch überbrücken, wobei es von entscheidender Bedeutung ist, daß die einzelnen Dichtlippen durch ihre Reihenschaltung innerhalb des Dichtspaltes einander in ihrer Wirkung ergänzen.

In den Hohlraum der Dichtung wird regulär nur während der bestimmungsgemäßen Verwendung und nur in dem erforderlichen Maße vorgespanntes, fließfähiges Medium eingespeist. Hiedurch wird eine ausgeglichene Anpreßung der Dichtfläche an das abzudichtende Bauteil bewirkt, wodurch die diffusionsbedingten Verluste an vorgespanntem Medium nicht störend in Erscheinung treten. Sie werden in Abhängigkeit von den Erfordernissen jeweils ersetzt.

Die einen Bestandteil der seitlichen Wandung der Nut bildenden Stützflächen und die sich bei einer Druckbeaufschlagung des Hohlraumes ergebende Bewegungsrichtung des Dichtelements können einen spitzen Winkel einschließen, zweckmäßig einen solchen zwischen 55 und 80°.Die sich bei Druckbeaufschlagung des Hohlraumes ergebende Dehnung des Dichtelementes ist in einem solchen Falle nicht nur auf den hinter dessen Dichtfläche liegenden Querschnittsbereich beschränkt, sondern in einer gleichmäßigen Weise auf nahezu die Gesamtheit des Profils, welches im wesentlichen an allen Stellen von übereinstimmender Wandstärke ist. Die spezifische Querschnittsbelastung ist dementsprechend deutlich reduziert.

Bei der Dichtung läßt sich die Dichtfläche in Abhängigkeit von dem Druck des in den Hohlraum eingespeisten, fließfähigen Mediums mit einer beliebig hohen Kraft an das gegenüberliegende Bauteil anpressen. Die gegenüber demselben erzielte Abdichtwirkung läßt sich hierdurch auf feinfühlige Weise steuern.

Die Dichtung eignet sich durch ihre spezielle Gestaltung insbesondere zur Verwendung bei der Abdichtung zwischen stumpf aufeinander stoßende Enden von Rohren. Eine Verwendung bei der Abdichtung von Wellen oder im Bereich von gradlinig verlaufenden Spalten ist jedoch ebenfalls möglich.

Der Gegenstand der Erfindung wird nachfolgend anhand der in der Anlage beigefügten Zeichnung weiter verdeutlicht. Diese nimmt bezug auf die gegenseitige Abdichtung der Stirnflächen zweier stumpf aufeinander stoßender Rohre. In der einen ist die umlaufende Nut 3 vorgesehen, welche in Richtung der anderen Stirnfläche geöffnet ist.

Die Nut 3 ist im Bereich ihrer Mündung innen- und außenseitig in spiegelbildlicher Weise verengt durch die ersten Leisten 8, welche das Dichtelement 4 beiderseits der Dichtfläche 7 mit keilförmig geneigten Stützflächen 9 hintergreifen. Die Stützflächen 9 schließen mit der sich bei einer Druckbeaufschlagung des Innenraumes 5 ergebenden Bewegungsrichtung einen Winkel von 60° ein.

Das Dichtelement besteht aus gummielastischen Werkstoff einer Härte von 55 Shore A. Es ist mit einstückig angeformten, im Bereich des Bodens 10 der Nut 3 angeordnet, einander zugewandten, zweiten Leisten 11 versehen, die einen Abstand B voneinander haben. In den durch den Abstand B gebildeten Zwischenraum mündet die Versorgungsöffnung 6, durch welche druckbeaufschlagtes, fließfähiges Medium in den Hohlraum 5 einspeisbar und aus demselben entfernbar ist.

Desweiteren weist das Dichtelement im Bereich des Bodens 10 und im Bereich der Seitenflächen 12 der Nut 3 jeweils zwei sich parallel zu seiner Längsrichtung erstreckende Dichtlippen 13 auf, die eine gute Abdichtung des Dichtelementes gegenüber den Wandungen der Nut bewirken. Die einzelnen Dichtlippen sind in dem sich insgesamt ergebenden Dichtspalt in einer Reihenschaltung angeordnet. Sie vermögen daher einander in ihrer Wirkung zu ergänzen.

Das Dichtelement der gezeigten Dichtung hat im nicht aufgeblähten Zustand die dargestellte Form. Bei einer Einspeisung eines vorgespannten, fließfähigen Mediums in den Innenraum 5 ergibt sich eine elastische Deformierung, welche eine Anpreßung der Dichtfläche 7 an das abzudichtende Bauteil 2 zur Folge hat. In die zugehörigen Deformierungen des Dichtelementes sind nahezu dessen gesamte Seiten- und Stirnwandungsbestandteile mit einbezogen.

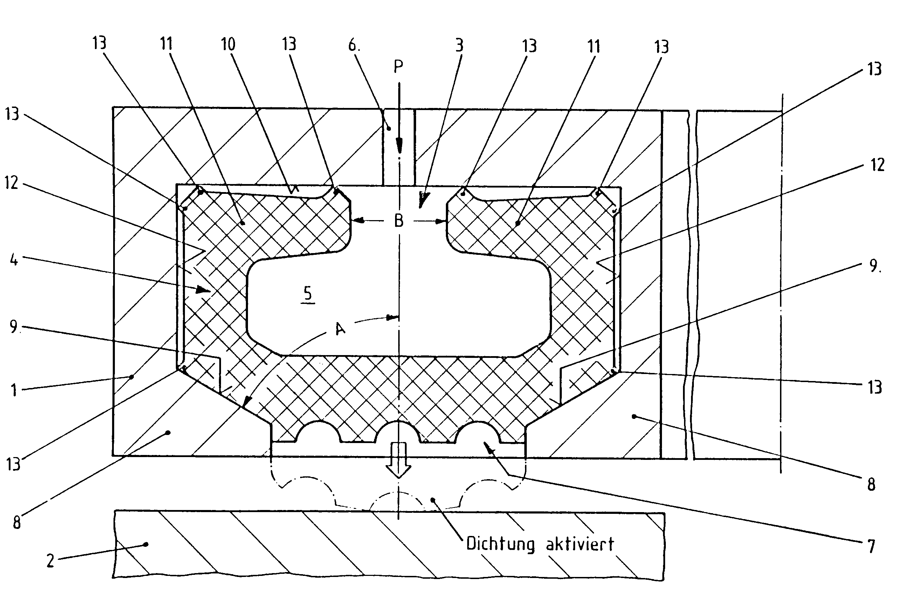

Bei Anwendung der in der Zeichnung gezeigten Proportionen ist bei den üblichen Versorgungsdrücken in Druckluftnetzen, diese betragen etwa 6 bar (kp/cm²) eine Schädigung oder ein Verlust des Dichtelementes 4 bei einer Druckbeaufschlagung des Hohlraumes 5 auch dann nicht zu befürchten, wenn das abzudichtende Bauteil 2, beispielsweise in Ermangelung eines vorausgegangenen Kupplungsvorganges, nicht verfügbar ist. In diesem Falle ist nämlich die sich ergebende Haftreibung insbesondere im Bereich der Dichtlippen 13 derart groß, daß das Dichtelement 4 in zuverlässiger Weise festgehalten wird. Nach Entlastung des Innenraumes 5 und nachgeholtem Kupplungsvorgang läßt sich daher auch in einem solchen Falle die erfindungsgemäße Dichtung ohne weiteres entsprechend den Erfordernissen aktivieren.

Das Dichtelement der erfindungsgemäßen Dichtung ist bei Nichtgebrauch in einer ausgezeichneten Weise durch seine Dichtfläche 7 in Bewegungsrichtung überragenden, unnachgiebigen, ersten Leisten 8 des einen Bauteils 1 geschützt. Eine Verwendung unter rauhen Betriebsbedingungen ist daher problemlos möglich.

## Patentansprüche

1. Aufblasbare Dichtung für den Spalt zwischen zwei sich parallel zueinander erstreckenden, unnachgiebigen Bauteilen (1,2) umfassend eine U-förmig in Richtung des Spaltes geöffnete Nut (3), in einem der Bauteile (1,2), ein in der Nut (3) gelagertes, gummielastisches Dichtelement (4) von entgegengesetzt U-förmigem Profil sowie eine in den von der Nut (3) und dem Dichtelement (4) umschlossenen Hohlraum (5) mündende Versorgungsöffnung (6), wobei das Dichtelement (4) im Bereich der Mündung der Nut mit einer Dichtfläche (7) versehen ist, wobei das Dichtelement (4) beweglich in der Nut (3) gelagert ist, wobei die Nut (3) im Bereich der Mündung durch beiderseitige, einander zugewandte, erste Leisten (8) verengt ist, die das Dichtelement (4) im Bereich der Mündung mit Stützflächen (9) hintergreifen und wobei die ersten Leisten (8) im Bereich der Mündung einen Abstand voneinander haben, der drei bis fünf mal so groß ist wie die Dicke der dünnsten Stelle der Wandung des Dichtelementes im Bereich der Mündung, dadurch gekennzeichnet, daß das Dichtelement (4) mit im Bereich des Bodens (10) der Nut (3) angeordneten, einander zugewandten, zweiten Leisten (11) versehen ist, die einen Abstand (B) voneinander haben.

2. Dichtung nach Anspruch 1, dadurch gekennzeichnet, daß das Dichtelement (4) ein spiegelbildlich gestaltetes Profil aufweist.

3. Dichtung nach Anspruch 1 bis 2, dadurch gekennzeichnet, daß das Dichtelement (4) wenigstens im Bereich des Bodens (10) und der Seitenflächen (12) der Nut (3) mit jeweils zwei sich parallel zu seiner Längsrichtung erstreckenden Dichtlippen (13) versehen ist.

## Claims

1. An inflatable seal for the gap between two inflexible components (1, 2), which extend parallel to one another, comprising a slot (3) which is opened in a U-shape in the direction of the gap, in one of the components (1, 2), a rubber-elastic sealing element (4) which is mounted in the slot (3) and is of opposite U-shaped profile, and a supply opening (6) which opens out into the hollow space (5) enclosed by the slot (3) and the sealing element (4), the sealing element (4) being provided with a sealing surface (7) in the region of the mouth of the groove, the sealing element (4) being mounted movably in the slot (3), the slot (3) being tapered in the region of the mouth by mutually facing, first strips (8) on each side which engage behind the sealing element (4) with support surfaces (9) in the region of the mouth, and the first strips (8) having in the region of the mouth a spacing from one another which is three to five times as large as the thickness of the thinnest point of the wall of the sealing element in the region of the mouth, characterised in that the sealing element (4) is provided with mutually facing, second strips (11) which are arranged in the region of the base (10) of the slot (3) and have a spacing (B) from one another.

2. A seal according to claim 1, characterised in that the sealing element (4) has a profile designed in mirror image.

3. A seal according to claim 1 or 2, characterised in that the sealing element (4) is provided in each case with two sealing lips (13) extending parallel to its longitudinal direction at least in the region of the base (10) and the side surfaces (12) of the slot (3).

## Revendications

1. Joint d'étanchéité gonflable pour l'intervalle existant entre deux pièces (1, 2) non flexibles, s'étendant parallèlement entre elles, comportant une rainure (3) en forme de U ouverte en direction de l'intervalle, un élément d'étanchéité (4) formé d'un matériau ayant l'élasticité du caoutchouc, logé dans la rainure (3) ayant un profil en forme de U opposé, ainsi qu'une ouverture d'alimentation (6) débouchant dans la cavité (5) entourée par la rainure (3) et l'élément d'étanchéité (4), cet élément d'étanchéité (4) étant pourvu d'une surface d'étanchéité (7) dans la zone de l'embouchure de la rainure, l'élément d'étanchéité (4) étant monté de façon mobile dans la rainure (3) et cette rainure (3) étant rétrécie, dans la zone de l'embouchure, par des premiers rebords (8) disposés sur les deux côtés, dirigés l'un vers l'autre et qui s'accrochent par des surfaces d'appui (9) en arrière de l'élément d'étanchéité (4) dans la zone de l'embouchure, les premiers rebords (8) étant espacés l'un de l'autre, dans la zone de l'embouchure, d'une distance qui est 3 à 5 fois plus grande que l'épaisseur à l'endroit le plus mince de la paroi de l'élément d'étanchéité dans la zone de l'embouchure, caractérisé en ce que l'élément d'étanchéité (4) est pourvu de seconds rebords (11), disposés dans une zone du fond (10) de la rainure (3), dirigés l'un vers l'autre et qui sont espacés l'un de l'autre d'une distance B.

2. Joint d'étanchéité selon la revendication 1, caractérisé en ce que l'élément d'étanchéité (4) a un profil de forme symétrique.

3. Joint d'étanchéité selon l'une quelconque des revendications 1 ou 2, caractérisé en ce que l'élément d'étanchéité (4) est pourvu, au moins dans une zone du fond (10) et des surfaces latérales (12) de la rainure (3), de respectivement deux lèvres d'étanchéité (13) s'étendant parallèlement à sa direction longitudinale.
